# EUROPEAN PATENT APPLICATION

(11) **EP 4 813 698 A1**
(43) Date of publication of application: **30.09.2026**
(21) Application number: 26166198.7
(22) Date of filing: 19.03.2026
(51) Int. Cl.: B60K 1/04

(54) **WORK VEHICLE**

(30) Priority: 28.03.2025 JP 2025055547
(71) Applicant: Kubota Corporation, Osaka-shi, Osaka 530-0011 (JP)
(72) Inventor: MORI, Akihiko, Sakai-shi, Osaka 5900908 (JP)
(74) Representative: Müller-Boré & Partner Patentanwälte PartG mbB

(57) **Abstract**

A work vehicle includes: a machine body (3) provided with a travel device (2); a hood (8) provided at a front portion of the machine body (3); an operator section (9) provided at a portion of the machine body (3) rearward of the hood (8), the operator section (9) having: a floor (12); and entry and exit sections (13) for boarding and deboarding the operator section (9), the entry and exit sections (13) being provided at left and right portions of the floor (12); and a battery (28) provided below a portion of the floor (12) corresponding to the left or right entry and exit section (13).

## Description

### BACKGROUND OF THE INVENTION

### 1. Field of the Invention

The present invention relates to a work vehicle.

### 2. Description of the Related Art

Examples of work vehicles include tractors. Some tractors have a hood provided at a front portion of the machine body, and a battery provided inside the hood, as in a tractor disclosed in JP 2014-065441A. This tractor has an engine provided inside the hood. In a work vehicle having an engine inside a hood, not only a battery but also various devices such as a turbocharger, an intercooler, and a purification device for purifying exhaust gas may be provided inside the hood.

### SUMMARY OF THE INVENTION

If various devices are provided inside the hood, the hood may become larger accordingly. Consequently, the hood may narrow forward visibility for an operator in an operator section located rearward of the hood. Therefore, there is room for improvement. The present invention aims to suppress an increase in the size of the hood in a work vehicle to improve the forward visibility from the operator section.

A work vehicle of the present invention includes:
a machine body (3) provided with a travel device (2);
a hood (8) provided at a front portion of the machine body (3);
an operator section (9) provided at a portion of the machine body (3) rearward of the hood (8), the operator section (9) having:
   a floor (12); and
   entry and exit sections (13) for boarding and deboarding the operator section (9), the entry and exit sections (13) being provided at left and right portions of the floor (12); and
a battery (28) provided below a portion of the floor (12) corresponding to the left or right entry and exit section (13).

According to an aspect of the present invention, the battery is provided below the floor of the operator section. Thus, in the case where various devices are provided inside the hood, an increase in the size of the hood can be suppressed because the battery is not provided inside the hood. As a result of suppressing an increase in the size of the hood, good forward visibility from the operator section can be achieved. In a work vehicle, a floor of an operator section has a relatively large area. Entry and exit sections for an operator to board and deboard the operator section are provided at left and right portions of the floor. Regions below the portions of the floor corresponding to the entry and exit sections are relatively large regions. According to an aspect of the present invention, the battery is provided below the portion of the floor corresponding to the left or light entry and exit section. Thus, since the regions below the portions of the floor corresponding to the entry and exit sections are relatively large regions, the battery can be provided below the portion of the floor corresponding to the left or light entry and exit section without difficulty. As a result of the entry and exit sections being provided on at the left and right portions of the floor, the operator can easily approach the battery from a lateral outer side of the floor. Thus, maintenance of the battery can be easily performed.

In one embodiment of the present invention, the work vehicle of the present invention further includes a radiator (31) provided inside the hood (8).

In a work vehicle that includes an electric motor instead of an engine, a radiator is provided inside the hood to produce cooling water for cooling the electric motor and an inverter. According to an aspect of the present invention, the battery is provided below the floor of the operator section, and therefore does not inhibit the flow of outside air supplied to the radiator through a grill of the hood. As a result, sufficient cooling water is likely to be produced in the radiator, making it possible to reduce overheating of objects to be cooled (engine, electric motor, inverter, etc.). Thus, the cooling performance of the work vehicle can be improved.

In one embodiment of the present invention, the work vehicle of the present invention further includes:
boarding and deboarding steps (15) each having a tread section (15b) provided at a position lower than the floor (12), the boarding and deboarding steps (15) being attached to portions of the floor (12) corresponding to the left and right entry and exit sections (13),
wherein the boarding and deboarding step (15) of the entry and exit section (13) on a side where the battery (28) is provided is provided laterally outward of the battery (28).

In a work vehicle, the boarding and deboarding steps for an operator to board and deboard an operator section are often attached to areas of left and right entry and exit sections of the floor, and the boarding and deboarding steps have tread sections provided at positions lower than the floor. According to an aspect of the present invention, the boarding and deboarding step of the entry and exit section on the side where the battery is provided is provided laterally outward of the battery. Thus, the boarding and deboarding step can be expected to function as a member for protecting the lateral outer side of the battery. With this configuration, the boarding and deboarding step can be expected to prevent a branch of a shrub or the like from coming into contact with the battery, which is advantageous in terms of protection of the battery.

In one embodiment of the present invention, the work vehicle of the present invention further includes:
a cover (77) having:
   an upper part (77a) covering a terminal (28a, 28b) at an upper portion of the battery (28); and
   a lower part (77b) covering a lower portion of the battery (28),
wherein the upper part (77a) is provided at a position higher than the tread section (15b) and is attachable and detachable.

In the case where a work vehicle is stored for a long period, an operator may remove harnesses from terminals of a battery. The operator may attach a booster cable to a terminal of the battery to charge the battery. In this way, the frequency of work performed on the terminals of the battery is relatively high. According to an aspect of the present invention, in the case where a cover for covering the battery is provided, the cover has the upper part and the lower part. The upper part of the cover is for covering the terminals at upper portions of the battery, and is removable. This configuration allows the operator to perform the work on the terminals of the battery by removing the upper part of the cover when performing the work on the terminals of the battery, and it is not necessary to remove the lower part of the cover. This is advantageous in terms of the workability.

In one embodiment of the present invention, in the work vehicle of the present invention, the lower part (77b) is made of a metal, and is provided at a position overlapping the tread section (15b) in a side view.

When an operator boards or deboards the floor (operator section) by treading on a tread section of a boarding and deboarding step, it is conceivable that the operator's foot placed on the tread section of the boarding and deboarding step will come into contact with the battery. According to an aspect of the present invention, the lower part of the cover is made of a metal, and is located at a position overlapping the tread section of each boarding and deboarding step in a side view. With this configuration, the operator's foot placed on the tread section of the boarding and deboarding step comes into contact with the metal lower part of the cover and does not come into direct contact with the battery. This is advantageous in terms of protection of the battery.

In one embodiment of the present invention, in the work vehicle of the present invention, the boarding and deboarding step (15) of the entry and exit section (13) on the side where the battery (28) is provided is removable from the floor (12).

According to the present invention, in the case where an operator on the lateral outer side of the floor performs maintenance of the battery, the operator can easily perform maintenance of the battery by removing, from the floor, the boarding and deboarding step of the entry and exit section on the side where the battery is provided in the tractor. This is advantageous in terms of workability.

In one embodiment of the present invention, the work vehicle of the present invention further includes:
a support frame (70) attaching the battery (28) at an attachment position (B1) below the floor (12) and supporting the battery (28) in such a manner that the battery (28) is movable laterally outward from the attachment position (B1),
wherein the battery (28) is removable from the support frame (70).

According to an aspect of the invention, the battery is attached at the attachment position, which is located below the floor, via the support frame. With this configuration, an operator on the lateral outer side of the floor can move the battery closer to the operator by moving the battery laterally outward from the attachment position. Thus, maintenance such as removing and attaching the battery can be easily performed, which is advantageous in terms of workability.

In one embodiment of the present invention, in the work vehicle of the present invention,
the support frame (70) has:
   a support section (71) supporting the battery (28);
   a front frame section (72) joined to and extending between a front portion of the support section (71) and the machine body (3); and
   a rear frame section (73) joined to and extending between a rear portion of the support section (71) and the machine body (3), and
the support section (71) is attached to the machine body (3) via the front frame section (72) and the rear frame section (73) in such a manner that the support section (71) is spaced apart laterally outward from the machine body (3).

According to an aspect of the present invention, the support frame to which the battery is attached has the support section, the front frame section, and the rear frame section. The support section (battery) is attached to the machine body via the front and rear frame sections so as to be spaced apart laterally outward from the machine body. With this configuration, for example, even if the work vehicle travels on a snowy road or performs snow removal work, and snow adheres to the vicinity of the battery, the snow easily falls from between the support section of the support frame and the machine body. This reduces the inconvenience resulting from stagnation of snow in the vicinity of the battery.

In one embodiment of the present invention, in the work vehicle of the present invention, the battery (28) is attached to an upper surface section of the support section (71).

According to an aspect of the present invention, the battery is attached to the upper surface section of the support section of the support frame, and the support section of the support frame can thereby be expected to function as a member for protecting the lower side of the battery. This is advantageous in terms of protection of the battery.

In one embodiment of the present invention, the work vehicle of the present invention further includes a harness (65) connected to a terminal (28a, 28b) of the battery (28), attached to an upper surface section of at least one of the front frame section (72) and the rear frame section (73), and extending between the battery (28) and the machine body (3).

According to an aspect of the present invention, in the case where the harness connected to the terminal of the battery extends between the battery and the machine body, the harness is attached to the upper surface section of the front frame section (rear frame section) of the support frame, and the front frame section (rear frame section) of the support frame can thereby be expected to function as a member for protecting the lower side of the harness. This is advantageous in terms of protection of the harness.

The above-mentioned and other embodiments, procedures, features, and effects of the present disclosure will become more apparent from the following detailed description of the embodiments with reference to the drawings.

### BRIEF DESCRIPTION OF THE DRAWINGS

Embodiments of the present invention will be described with reference to the following drawings:
FIG. 1 is a right side view of a tractor with a front loader attached to a front portion of its machine body;
FIG. 2 is a right side view of a front portion of an operator section and an area around a hood;
FIG. 3 is a vertical right side view of the front portion of the operator section and the area near the hood;
FIG. 4 is a transverse plan view of the front portion of the operator section and the area near the hood;
FIG. 5 is a transverse plan view of an area around a region between a wall section and the operator section;
FIG. 6 is a vertical front view of an area around the wall section and a frame;
FIG. 7 is a front view of a front portion of the hood;
FIG. 8 is a front view of left and right illumination units and left and right headlights;
FIG. 9 is a right side view of the left and right illumination units and the left and right headlights;
FIG. 10 is a front view of the front portion of the hood and a front guard;
FIG. 11 is a plan view illustrating an illuminating state of the left and right illumination units and an illuminating state of the left and right headlights, with the front loader attached to the front portion of the machine body;
FIG. 12 is a plan view showing an illuminating state of the left and right illumination units and an illuminating state of the left and right headlights, with a rotary tillage device attached to a rear portion of the machine body;
FIG. 13 is a right side view of a battery and a support plate;
FIG. 14 is a plan view of the battery and the support plate;
FIG. 15 is a right side view of a support frame;
FIG. 16 is a plan view of the support frame;
FIG. 17 is a front view of the support frame;
FIG. 18 is a vertical front view of the support frame;
FIG. 19 is a plan view of the battery attached to the support frame;
FIG. 20 is an exploded plan view of the support frame, the battery, and a cover;
FIG. 21 is a right side view of a boarding and deboarding step attached to a floor, and the battery and the cover attached to the support frame;
FIG. 22 is a right side view of an upper part of the cover removed from the state shown in FIG. 21; and
FIG. 23 is a right side view of the boarding and deboarding step and the upper and lower parts of the cover removed from the state shown in FIG. 21.

### DETAILED DESCRIPTION OF THE PREFERRED EMBODIMENTS

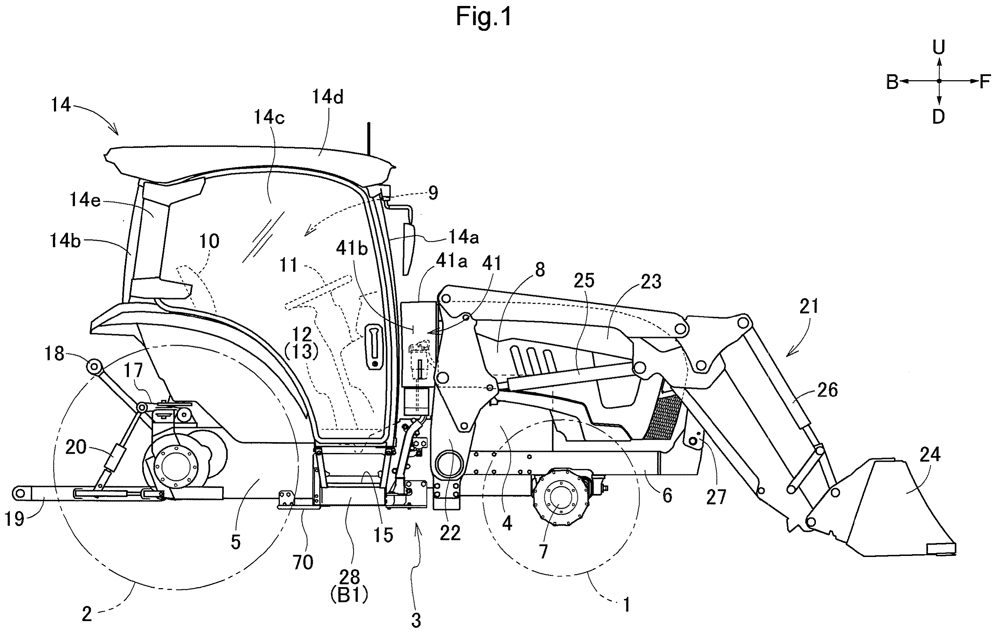

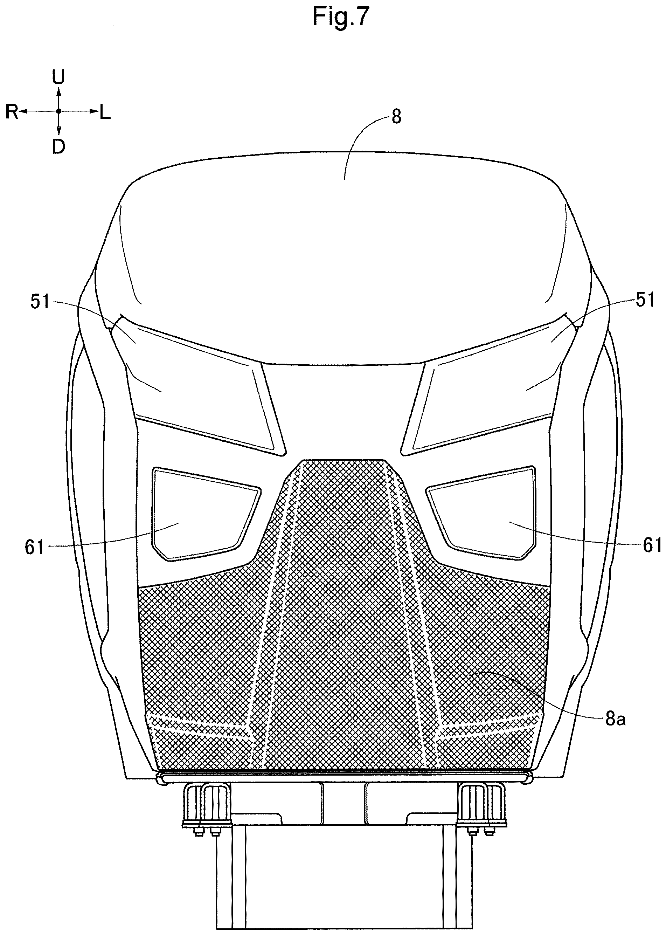

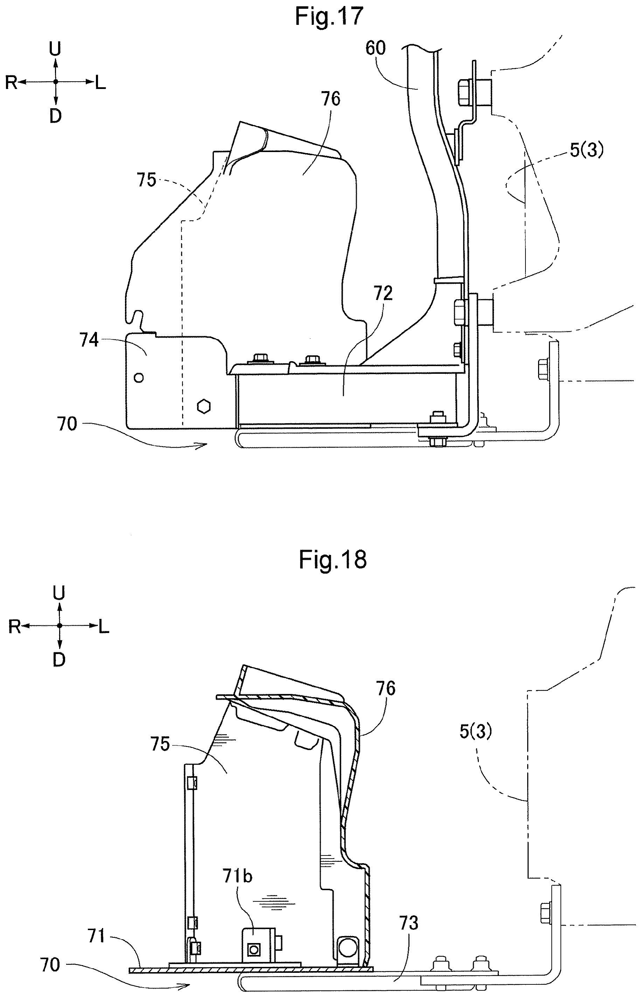

FIGS. 1 to 23 show a tractor, which is an example of a work vehicle. In FIGS. 1 to 23, F indicates a front direction, B indicates a rear direction, U indicates an upward direction, D indicates a downward direction, R indicates a right direction, and L indicates a left direction.

### Overall Configuration of Tractor

As shown in FIG. 1, left and right front wheels 1 are provided at front portions of a machine body 3, and left and right rear wheels 2 are provided at rear portions of the machine body 3. The front wheels 1 and the rear wheels 2 support the machine body 3.

The machine body 3 includes an engine 4 of the diesel type, a transmission case 5, and a front frame 6. The transmission case 5 is joined to a rear portion of the engine 4, and the front frame 6 is connected to a lower portion of the engine 4 and extends forward. A front axle case 7 is attached to the front frame 6. The front wheels 1 are provided on the front axle case 7. The rear wheels 2 are provided on rear portions of the transmission case 5.

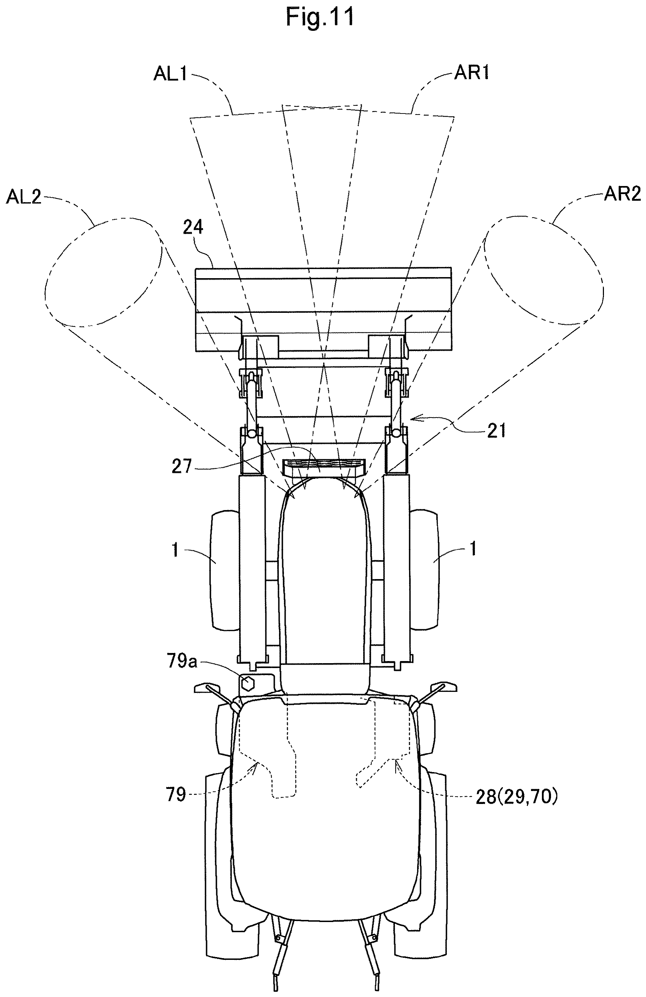

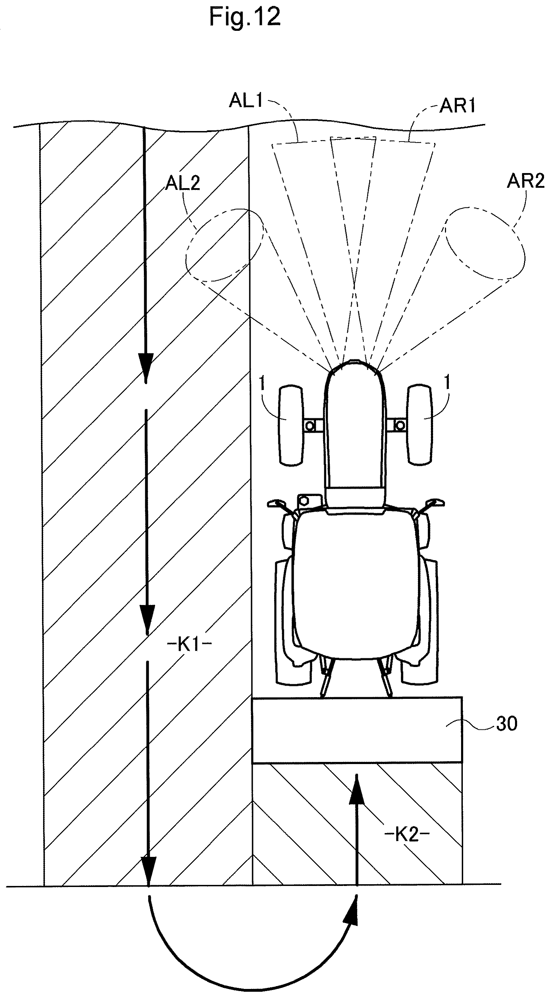

A hood 8 covering the engine 4 is provided at a front portion of the machine body 3. An operator section 9 is provided at a portion of the machine body 3 rearward of the engine 4 and the hood 8. As shown in FIGS. 1 and 11, a front loader 21 is attached to a front portion of the machine body 3. As shown in FIG. 12, a rotary tillage device 30 is attached to a rear portion of the machine body 3.

### Configuration of Operator Section

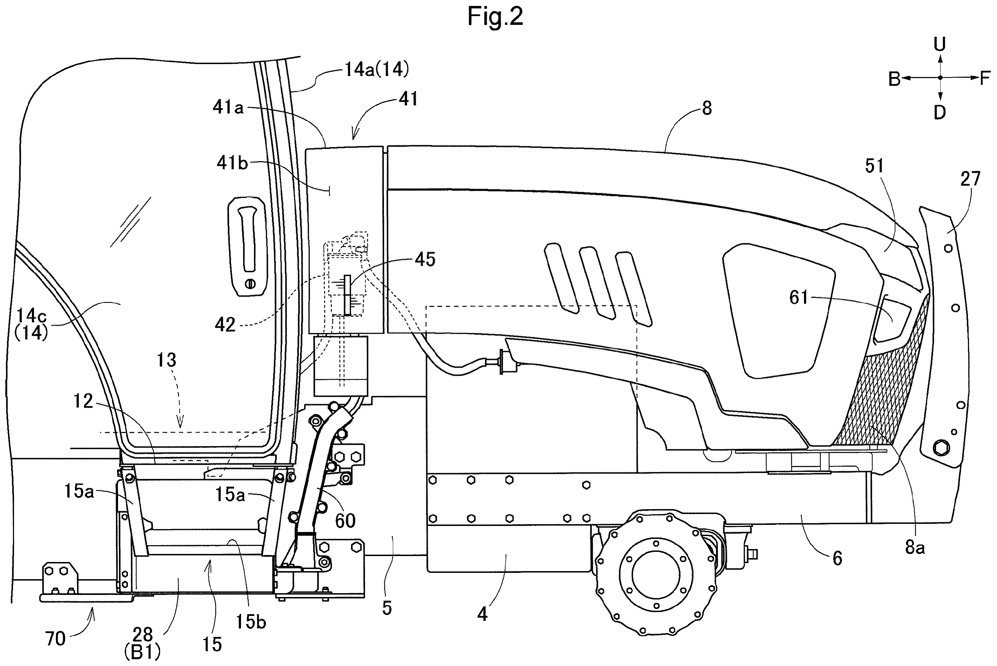

As shown in FIGS. 1 and 2, the operator section 9 has an operator seat 10, a steering wheel 11 for steering the front wheels 1, a floor 12, entry and exit sections 13, and a cabin 14. The operator seat 10 and the steering wheel 11 are provided inside the cabin 14. The floor 12 is provided at a lower portion of the cabin 14.

The cabin 14 has a windshield 14a, a rear glass 14b, left and right doors 14c, and a roof section 14d. Each door 14c can be opened and closed with its rear portion as a pivot point, with use of a door hinge 14e provided at the rear portion of the door 14c.

Left and right entry and exit sections 13 for an operator to board and deboard the operator section 9 (the floor 12) are provided at left and right front portions of the floor 12. Portions of the floor 12 in the vicinity of lower portions of the doors 14c while the doors 14c of the cabin 14 are closed serve as the entry and exit sections 13.

### Configuration of Boarding and Deboarding Step

As shown in FIGS. 1 and 2, left and right boarding and deboarding steps 15 are attached to the portions of the floor 12 corresponding to the entry and exit sections 13. Each boarding and deboarding step 15 has front and rear leg sections 15a, and a tread section 15b extending in a front-rear direction between lower portions of the leg sections 15a.

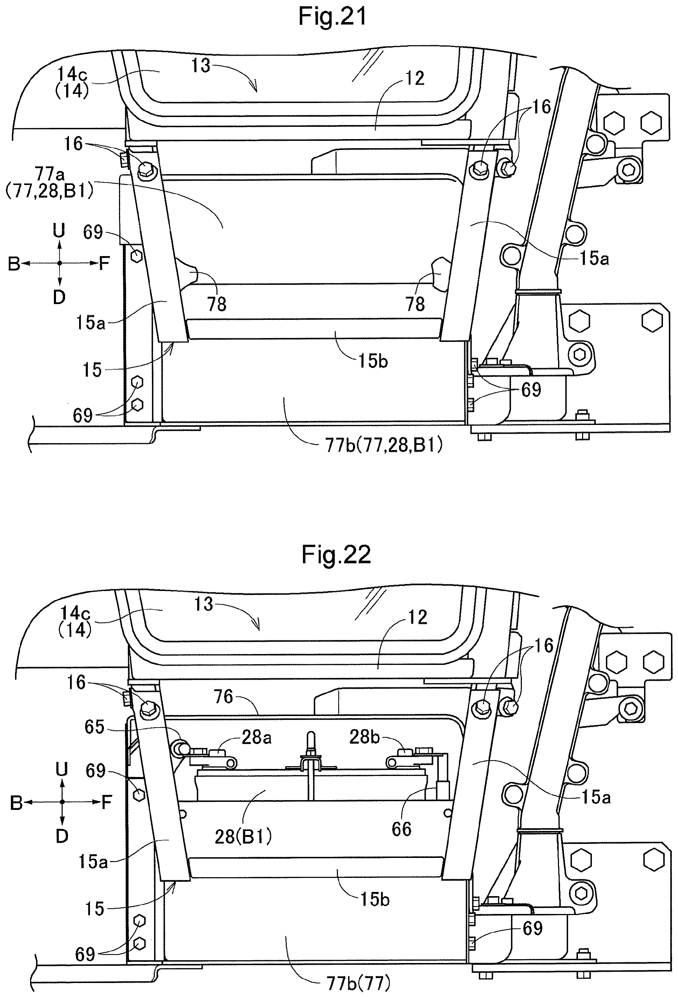

An upper portion of each leg section 15a of the boarding and deboarding step 15 is attached to the floor 12 by a bolt 16 (see FIGS. 21 and 22), and the leg sections 15a of the boarding and deboarding step 15 extend obliquely toward the lateral outer side and downward from the floor 12. The tread section 15b of the boarding and deboarding step 15 is provided at a position lower than the floor 12. An operator opens the door 14c of the cabin 14, places their foot on the tread section 15b of the boarding and deboarding step 15, and boards or deboards the operator section 9 (the floor 12) through the entry and exit section 13.

### Configuration of Front Loader

As shown in FIGS. 1 and 11, a front loader 21 is attached to a front portion of the machine body 3. The front loader 21 has left and right base sections 22, left and right arms 23, a bucket 24, left and right arm cylinders 25, and left and right bucket cylinders 26.

The base sections 22 are joined to left and right front portions of the transmission case 5. The arms 23 are attached to upper portions of the base sections 22 such that they can pivot up and down, and extend forward. The bucket 24 is attached to front end portions of the left and right arms 23 such that the bucket 24 can pivot up and down, and is provided forward of the hood 8.

The arm cylinders 25 are attached to and extend between the base sections 22 and the arms 23. The arm cylinders 25 are operated to extend and retract. The arms 23 are thereby pivoted up and down. The bucket cylinders 26 are attached to and extend between the arms 23 and the bucket 24. The bucket cylinder 26 is operated to extend and retract. The bucket 24 is thereby pivoted up and down.

### Configuration of Rotary Tillage Device

As shown in FIG. 12, a rotary tillage device 30 is attached to a rear portion of the machine body 3.

As shown in FIG. 1, left and right lift arms 17 are provided at upper rear portions of the transmission case 5 and extend rearward. One top link 18 is attached to an upper rear portion of the transmission case 5 such that the top link 18 can pivot up and down, and extends rearward. Left and right lower links 19 are attached to lower rear portions of the transmission case 5 such that the lower links 19 can pivot up and down, and extend rearward. Left and right rods 20 are connected to and extend between the lift arms 17 and the lower links 19.

As shown in FIGS. 1 and 12, the rotary tillage device 30 is attached to the top link 18 and the lower links 19. The rotary tillage device 30 is thereby attached to the rear portion of the machine body 3. The lift arms 17 are pivoted up and down. The rotary tillage device 30 is thereby raised and lowered through the top link 18 and the lower links 19.

A transmission shaft (not shown) is connected to and extends between a PTO shaft (not shown) provided at a rear portion of the transmission case 5 and an input shaft (not shown) of the rotary tillage device 30. Thus, motive power from the PTO shaft is transmitted to the rotary tillage device 30, and the rotary tillage device 30 is driven.

### Configuration of Area Around Engine

A turbocharger (not shown) is provided at a left portion of the engine 4. As shown in FIGS. 2, 3, and 4, a radiator 31 for generating cooling water for the engine 4, and a fan 32 are provided forward of the engine 4. An intercooler 33 for cooling air from the turbocharger is provided forward of a lower portion of the radiator 31.

A grill 8a is provided at a front portion of the hood 8. The action of the fan 32 causes outside air in front of the hood 8 to enter the interior of the hood 8 through the grill 8a of the hood 8 and to be supplied to the radiator 31 and the intercooler 33.

A purification device 34 for purifying exhaust gas from the engine 4 is provided at an upper left portion of the engine 4 in the front-rear direction. Examples of the purification device 34 include a diesel particulate filter and a selective catalytic reduction device.

An air cleaner 35 is provided at an upper right portion of the engine 4 in the front-rear direction. An intake duct 36 extends forward from a rear lower portion of the air cleaner 35 along a right side of the engine 4. An intake port 36a of the intake duct 36 is provided forward of the radiator 31. Outside air that has entered the interior of the hood 8 through the grill 8a of the hood 8 enters the intake duct 36 from the intake port 36a, and is supplied to the air cleaner 35 through the intake duct 36.

A flat plate-shaped heat shield plate 37 having a vertical wall shape is provided between the purification device 34 and the air cleaner 35 in the front-rear direction. The purification device 34 and the air cleaner 35 are arranged next to each other in the left-right direction at upper portions of the engine 4.

### Configuration of Region R1 Between Operator Section and Wall Section

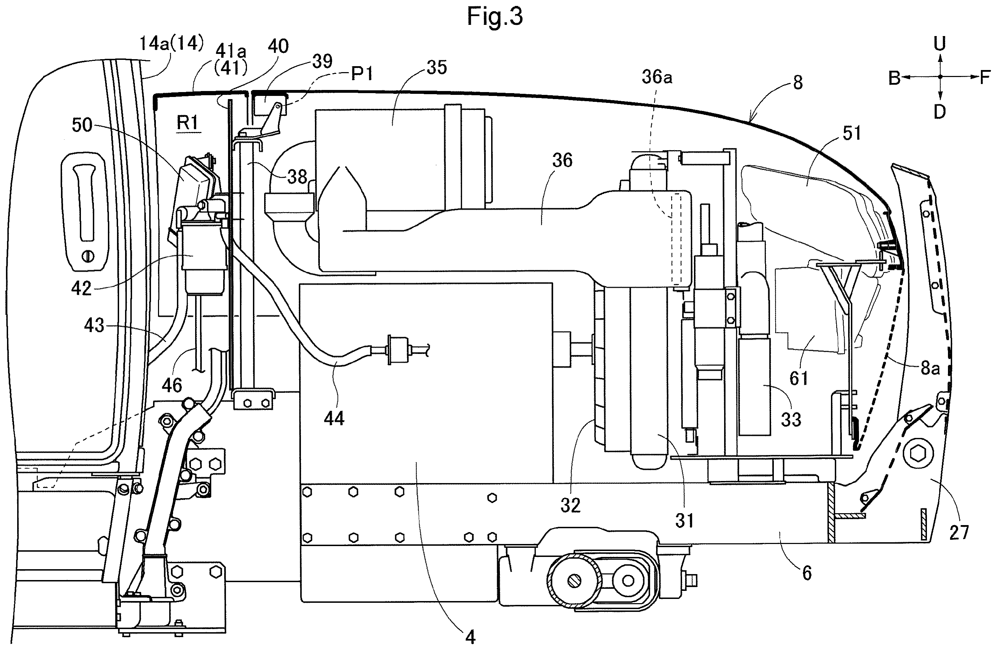

As shown in FIGS. 3, 4, 5, and 6, the windshield 14a of the cabin 14 extends up to an area around an upper front portion of the transmission case 5, and functions as a front wall section of the operator section 9.

A frame 38, which has a U-shaped gantry in a front view, is attached to an upper front portion of the transmission case 5. The frame 38 has left and right vertical parts 38a attached to upper front portions of the transmission case 5, a lateral part 38b joined to and extending between upper portions of the vertical parts 38a, a lateral part 38c joined to and extending between vertically intermediate portions of the vertical parts 38a, and a bracket 38d joined to the right vertical part 38a.

A hood support section 39 is attached to the lateral part 38b of the frame 38. The hood 8 is attached to the hood support section 39 so as to be openable and closable about an axis P1 extending in the left-right direction. The engine 4, the turbocharger, the radiator 31, the fan 32, the intercooler 33, the purification device 34, and the air cleaner 35 are housed inside the hood 8.

A plate-shaped wall section 40 is attached to the lateral parts 38b and 38c of the frame 38, and is provided on the side where the operator section 9 is located relative to the frame 38. The wall section 40 is provided forward of the operator section 9 (the windshield 14a of the cabin 14), with a spacing therebetween.

The wall section 40 partitions the engine 4 (the hood 8) from the operator section 9 (the windshield 14a of the cabin 14). A region R1 (space) is formed between the operator section 9 (the windshield 14a of the cabin 14) and the wall section 40.

As shown in FIGS. 2 to 5, a cover 41 covering the region R1 extends between the operator section 9 (the windshield 14a of the cabin 14) and the wall section 40. The cover 41 has an upper surface section 41a covering the upper side of the region R1, and left and right lateral surface sections 41b covering left and right lateral outer sides of the region R1.

### Configuration of Water Separator Provided in Region R1

As shown in FIGS. 3 to 6, the bracket 38d of the frame 38 extends rearward through an opening of the wall section 40 and enters the interior of the region R1.

A water separator 42 is provided in the region R1. Specifically, the water separator 42 is attached to the bracket 38d of the frame 38 and is provided at an upper right portion of the wall section 40 on the side where the operator section 9 (the windshield 14a of the cabin 14) is located. The water separator 42 is covered by the cover 41 and is located close to an inner surface of the right lateral surface section 41b of the cover 41.

As shown in FIG. 11, a fuel tank 79 is provided below the left entry and exit section 13 of the floor 12, at a position lower than the water separator 42. The fuel tank 79 protrudes forward beyond a left front end portion of the floor 12. A fuel inlet 79a is provided in the protruding portion (front portion) of the fuel tank 79.

As shown in FIGS. 3 to 6, a fuel hose 43 is connected to and extends between the fuel tank 79 and the water separator 42. A fuel hose 44 extends from the water separator 42 and is connected to a pump (not shown).

The action of the pump causes the fuel in the fuel tank 79 to be lifted through the fuel hose 43 to the position of the water separator 42 and to be supplied to the water separator 42. The water separator 42 separates water from the fuel, and collects and store the separated water. The fuel from which water has been separated is supplied from the water separator 42 through the fuel hose 44 to a fuel injection device (not shown) of the engine 4 via the pump.

As shown in FIGS. 2, 4, and 5, a window section 45, which is elongated in the up-down direction, is provided in the right lateral surface section 41b of the cover 41. The operator can visually check the water separator 42 from the lateral outer side of the right lateral surface section 41b of the cover 41 through the window section 45, and can check the amount of water collected and stored in the water separator 42.

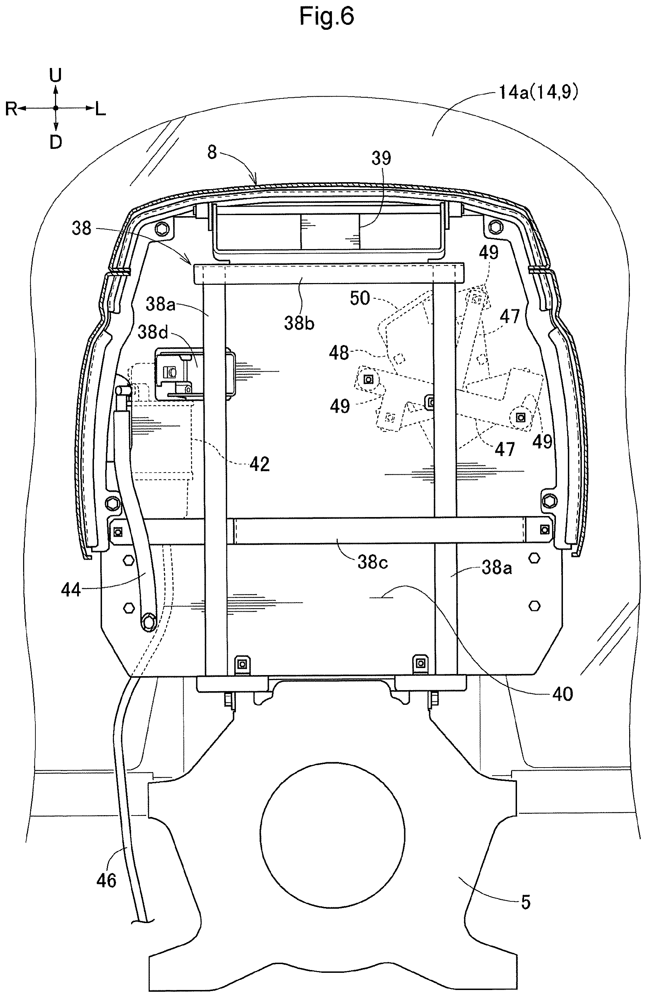

As shown in FIGS. 3 and 6, a drain hose 46 is attached to the water separator 42 and extends downward. The operator removes the cover 41 and operates the water separator 42. The water collected and stored in the water separator 42 can thus be discharged downward through the drain hose 46.

### Configuration of Controller Provided in Region R1

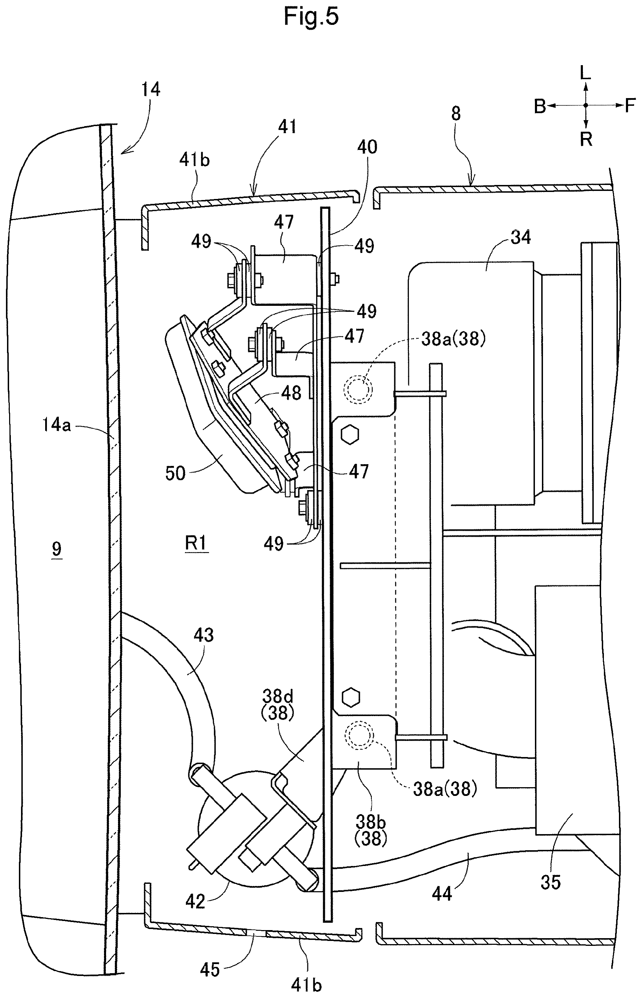

As shown in FIGS. 5 and 6, a plurality of stays 47 are attached to upper left portions of the wall section 40 on the side where the operator section 9 (the windshield 14a of the cabin 14) is located, via vibration-absorbing rubbers 49. A plate-shaped support member 48 is attached to the stays 47 via the vibration-absorbing rubbers 49.

A controller 50 for controlling the engine 4 is provided in the tractor. The controller 50 is attached to a portion of the support member 48 on the side where the operator section 9 (the windshield 14a of the cabin 14) is located. The controller 50 is provided at an upper left portion of the wall section 40 on the side where the operator section 9 (the windshield 14a of the cabin 14) is located. In other words, the controller 50 is provided in the region R1 and is attached to the wall section 40. The controller 50 is covered by the cover 41 and is located close to an inner surface of the left lateral surface section 41b of the cover 41.

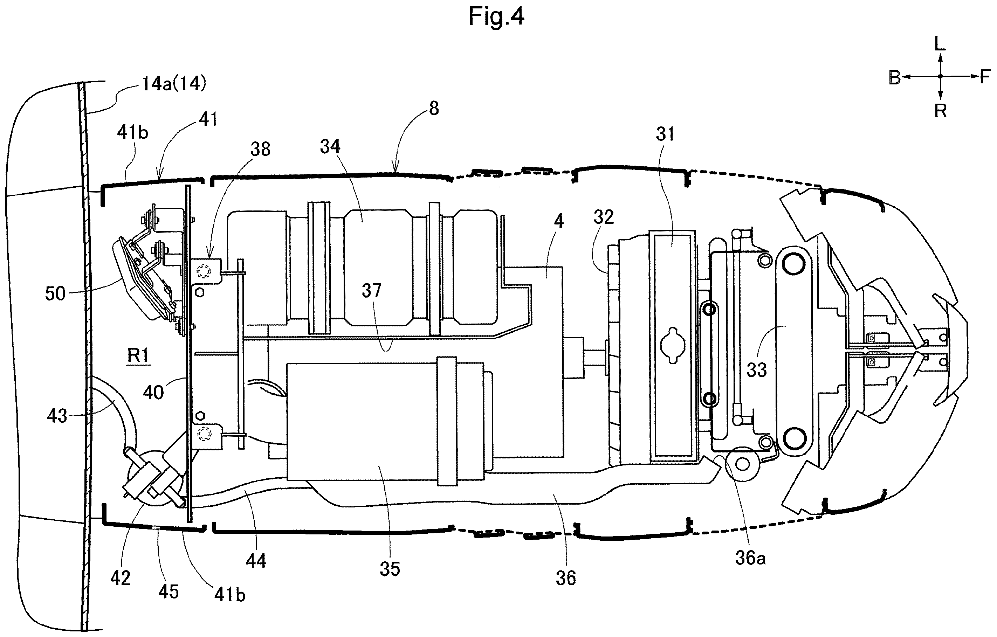

As shown in FIGS. 4 and 5, the stays 47 and the support member 48 are configured such that, in a plan view, a right portion of the support member 48 is located close to the wall section 40, while a left portion of the support member 48 is located rearward away from the wall section 40. Thus, in a plan view, the controller 50 is inclined relative to the wall section 40 and is inclined relative to the front-rear direction of the machine body 3 such that a left portion (a lateral outer portion relative to the machine body 3) of the controller 50 is located rearward of a right portion (a portion on the central side in the left-right direction of the machine body 3) of the controller 50.

### Relationship Between Water Separator and Controller Provided in Region R1

As shown in FIGS. 3, 4, and 5, the air cleaner 35 is provided inside the hood 8, forward of the wall section 40, and on the right side relative to the center in the left-right direction of the machine body 3 (the engine 4) in a plan view. The purification device 34 is provided inside the hood 8, forward of the wall section 40, and on the left side relative to the center in the left-right direction of the machine body 3 (the engine 4) in a plan view.

The water separator 42 is provided on the right side relative to the center in the left-right direction of the machine body 3 (the engine 4) in a plan view, on the same side as the air cleaner 35, and on the side opposite to the purification device 34. The controller 50 is provided on the left side relative to the center in the left-right direction of the machine body 3 (the engine 4) in a plan view, on the same side as the purification device 34, and on the side opposite to the air cleaner 35.

### Configuration of Illumination Unit Provided on Hood

As shown in FIGS. 2, 3, and 7, left and right illumination units 51 are provided at upper front portions of the hood 8, above the grill 8a of the hood 8.

The right illumination unit 51 is provided above a right portion of the grill 8a of the hood 8 and extends into a right lateral portion of the hood 8 beyond a right headlight 61, which will be described later. The left illumination unit 51 is provided above a left portion of the grill 8a of the hood 8 and extends into a left lateral portion of the hood 8 beyond a left headlight 61, which will be described later.

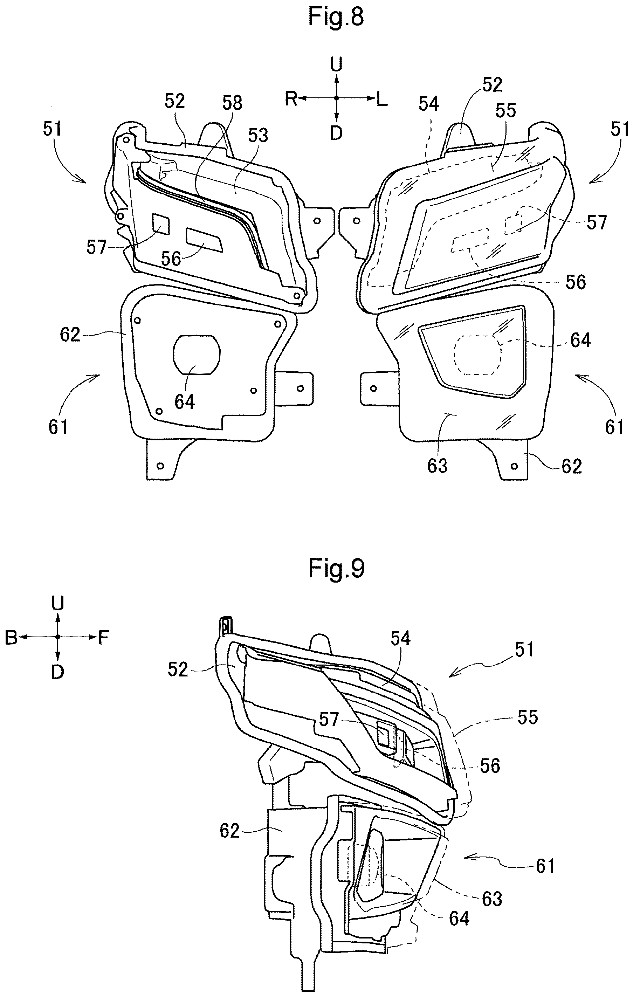

As shown in FIGS. 8 and 9, the left and right illumination units 51 each include a case 52, a reflector 53, an inner lens 54, an outer lens 55, a first illumination section 56, a second illumination section 57, and a sidelight 58, and are symmetrical in the left-right direction.

The first illumination section 56 and the second illumination section 57 include light-emitting diodes. The first illumination section 56 and the second illumination section 57 are arranged next to each other in the left-right direction at a lower section of the case 52. The first illumination section 56 is provided at a portion on the central side in the left-right direction of the hood 8 relative to the second illumination section 57, and the second illumination section 57 is provided at a right (left) lateral outer portion of the hood 8 relative to the first illumination section 56.

The reflector 53 is configured in an angled shape in a front view and extends on the case 52 across an upper portion of the first illumination section 56, an upper portion of the second illumination section 57, and a portion on the central side in the left-right direction of the hood 8 relative to the first illumination section 56.

The sidelight 58 includes light-emitting diodes and is configured in an angled bar shape in a front view. The sidelight 58 extends on the reflector 53 along the left-right direction across an upper portion of the first illumination section 56, an upper portion of the second illumination section 57, and a portion on the central side in the left-right direction of the hood 8 relative to the first illumination section 56.

The inner lens 54 is configured as a slightly colored (e.g., orange-colored), translucent component, and is configured in an angled shape in a front view, having substantially the same outer shape as the reflector 53. The inner lens 54 is attached to the reflector 53 and covers the sidelight 58. The outer lens 55 is transparent. The outer lens 55 is attached to the case 52 and covers the inner lens 54, the first illumination section 56, the second illumination section 57, and the sidelight 58.

### Configuration of Headlight Provided on Hood

As shown in FIGS. 2, 3, and 7, left and right headlights 61 are provided at upper front portions of the hood 8.

The right headlight 61 is adjacent to a left lower portion of the right illumination unit 51 (a portion on the central side in the left-right direction of the hood 8) and is provided at an upper right portion of the grill 8a of the hood 8. The left headlight 61 is adjacent to a right lower portion of the left illumination unit 51 (a portion on the central side in the left-right direction of the hood 8) and is provided at an upper left portion of the grill 8a of the hood 8.

As shown in FIGS. 8 and 9, the left and right headlights 61 each include a case 62, an outer lens 63, and a projector lamp 64, and are symmetrical in the left-right direction. The projector lamp 64 is provided in the case 62. The outer lens 63 is transparent. The outer lens 63 is attached to the case 62 and covers the projector lamp 64.

### Illuminating State of Illumination Unit and Headlight

As shown in FIGS. 11 and 12, the first illumination section 56 of the right illumination unit 51 and the right headlight 61 illuminate a region forward of the hood 8 (see an illumination region AR1). The second illumination section 57 of the right illumination unit 51 illuminates a region (ground) forward of the right front wheel 1 (see an illumination region AR2), rearward and downward of the region illuminated by the first illumination section 56 (see the illumination region AR1).

The first illumination section 56 of the left illumination unit 51 and the left headlight 61 illuminate a region forward of the hood 8 (see an illumination region AL1). The second illumination section 57 of the left illumination unit 51 illuminates a region (ground) forward of the left front wheel 1 (see an illumination region AL2), rearward and downward of the region illuminated by the first illumination section 56 (see the illumination region AL1).

The three components, namely the first illumination section 56 and the second illumination section 57 of each illumination unit 51, and the headlight 61, can each be turned on and off independently. For example, in each illumination unit 51, the first illumination section 56 can be turned on, while the second illumination section 57 is turned off. Conversely, the first illumination section 56 can be turned off while the second illumination section 57 is turned on. The headlight 61 can be turned on and off independently of the turning on and off of the first illumination section 56 and the second illumination section 57 of the illumination unit 51.

As shown in FIGS. 1 and 11, the front loader 21 is attached to a front portion of the machine body 3. The bucket 24 is provided forward of the hood 8 and forward of the left and right front wheels 1 in a plan view. As shown in FIGS. 1 and 2, a front guard 27 is attached to a front portion of the front frame 6 (machine body 3) so as to be located forward of the hood 8.

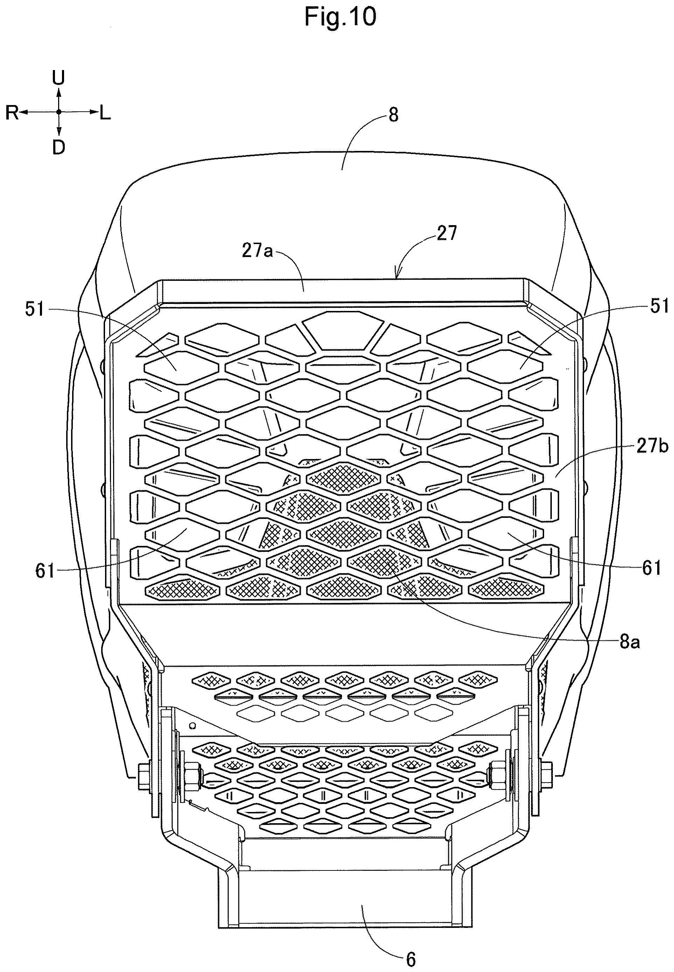

As shown in FIG. 10, the front guard 27 has a frame section 27a and a mesh section 27b. The frame section 27a is formed in a U-shaped gantry in a front view. A lower portion of the frame section 27a is attached to a front end portion of the front frame 6. The mesh section 27b is formed of metal and has a large number of large openings. The mesh section 27b is attached to the frame section 27a.

In a state where the front guard 27 is attached, the first illumination sections 56 and the sidelights 58 of the left and right illumination units 51, the left and right headlights 61, and the grill 8a of the hood 8 are located within an inner range the frame section 27a of the front guard 27 in a front view, as shown in FIGS. 8, 9, and 10. The first illumination sections 56 and the sidelights 58 of the left and right illumination units 51, the left and right headlights 61, and the grill 8a of the hood 8 are located rearward of the mesh section 27b of the front guard 27.

The second illumination sections 57 of the left and right illumination units 51 are located within the inner range of the frame section 27a of the front guard 27 in a front view, and are located close to left and right portions of the frame section 27a of the front guard 27, respectively.

In this state, as shown in FIG. 11, light from the first illumination section 56 of the right illumination unit 51 and the right headlight 61 passes through the inner range of the frame section 27a (the mesh section 27b) of the front guard 27 and illuminates a region near a right portion of the bucket 24 and a region forward of the right portion of the bucket 24 (see the illumination region AR1).

Light from the first illumination section 56 of the left illumination unit 51 and the left headlight 61 passes through the inner range of the frame section 27a (the mesh section 27b) of the front guard 27 and illuminates a region near a left portion of the bucket 24 and an area forward of the left portion of the bucket 24 (see the illumination region AL1).

Light from the second illumination section 57 of the right illumination unit 51 passes laterally outward to the right portion of the front guard 27 (the frame section 27a) and illuminates a region near a right portion of the bucket 24 and a lateral outer region (ground) to the right of the bucket 24 (see the illumination region AR2).

Light from the second illumination section 57 of the left illumination unit 51 passes laterally outward to the left of a left portion of the front guard 27 (the frame section 27a) and illuminates a region near a left portion of the bucket 24 and a lateral outer region (ground) to the left of the bucket 24 (see the illumination region AL2).

There may be cases where, in the state shown in FIG. 11, the operator turns off the second illumination section 57 of the right illumination unit 51 or the second illumination section 57 of the left illumination unit 51, as necessary. There may also be cases where the operator turns off the second illumination sections 57 of both the left and right illumination units 51.

When the rotary tillage device 30 is attached to the rear portion of the machine body 3, the front guard 27 (see FIGS. 1, 2, and 11) is often removed as shown in FIG. 12.

In the case where tilling work is performed in a field using the rotary tillage device 30, after one tilling process K1 is completed and the machine body 3 reaches an end portion of the field, the operator in the operator section 9 turns the machine body 3 at the end portion of the field, causes the machine body 3 to travel in a direction opposite to that in the previous tilling process K1, and performs the next tilling process K2.

For example, in the case where the operator turns the machine body 3 to the left at an end portion of the field, in the tilling process K2, the operator visually check a right part of a region tilled in the previous tilling process K1 and a region forward of the left front wheel 1, and causes the machine body 3 to travel such that the right part of the region tilled in the previous tilling process K1 matches a left part of a region (the rotary tilling device 30) tilled in the next tilling process K2.

In this type of tilling work, the first illumination section 56 of the right illumination unit 51 and the right headlight 61 illuminate a region forward of the hood 8 (see the illumination region AR1). The first illumination section 56 of the left illumination unit 51 and the left headlight 61 illuminate a region forward of the hood 8 (see the illumination region AL1).

When a region tilled in the previous tilling process K1 is located on the left side of the machine body 3, the left front wheel 1 is located near a right part of the region tilled in the previous tilling process K1. The second illumination section 57 of the left illumination unit 51 illuminates a region (ground) forward of the left front wheel 1, rearward and downward of the region AL1 illuminated by the first illumination section 56 (see the illumination region AL2). Therefore, the second illumination section 57 of the left illumination unit 51 illuminates a region (ground) forward of the left front wheel 1 and illuminates a right part of the region tilled in the previous tilling process K1 (see the illumination region AL2).

When a region tilled in the previous tilling process K1 is located on the right side of the machine body 3, the right front wheel 1 is located near a left part of the region tilled in the previous tilling process K1. The second illumination section 57 of the right illumination unit 51 illuminates, a region (ground) forward of the right front wheel 1, rearward and downward of the region AR1 illuminated by the first illumination section 56 (see the illumination region AR2). Therefore, the second illumination section 57 of the right illumination unit 51 illuminates the region (ground) forward of the right front wheel 1 and illuminates a left part of the region tilled in the previous tilling process K1 (see the illumination region AR2).

### Configuration of Battery

As shown in FIGS. 1, 2, and 11, a battery 28 with a voltage of 12 volts is provided below the right entry and exit section 13 of the floor 12. The battery 28 supplies electric power to the controller 50, the illumination units 51, and the headlights 61.

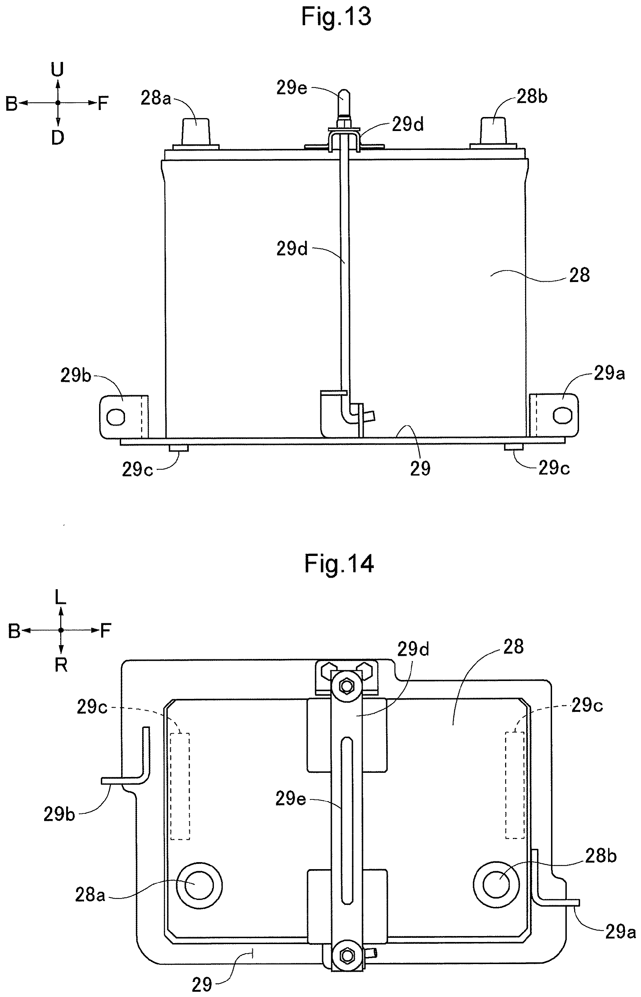

As shown in FIGS. 13 and 14, the battery 28 is attached to a support plate 29. The support plate 29 is formed in a flat plate shape. Attachment sections 29a and 29b are attached to front and rear portions of the support plate 29. Two slide plates 29c, each having a flat plate shape, are attached to front and rear portions of a lower surface of the support plate 29 in the left-right direction. A detachable attachment tool 29d is provided on the support plate 29. The attachment tool 29d has a handle section 29e.

The battery 28 is placed on an upper surface of the support plate 29 and is attached to the support plate 29 via the attachment tool 29d. A positive terminal 28a is provided at an upper right rear portion of the battery 28, and a negative terminal 28b is provided at an upper right front portion of the battery 28.

### Configuration of Support Frame Supporting Battery and Support Plate

As shown in FIGS. 1, 2, and 11, a support frame 70 that supports the battery 28 and the support plate 29 is attached to a right portion of the transmission case 5 (the machine body 3).

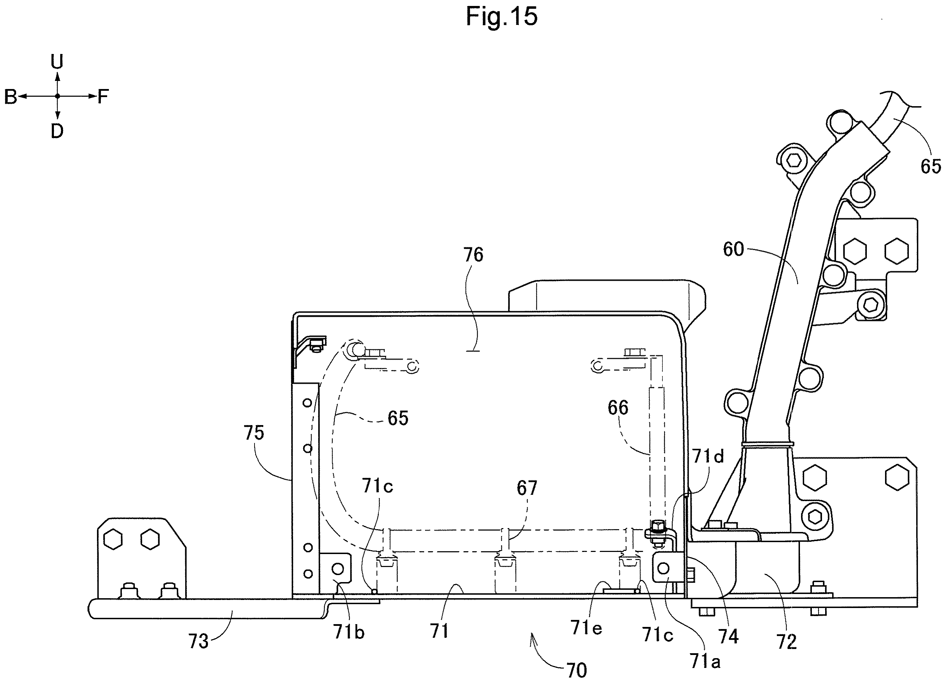

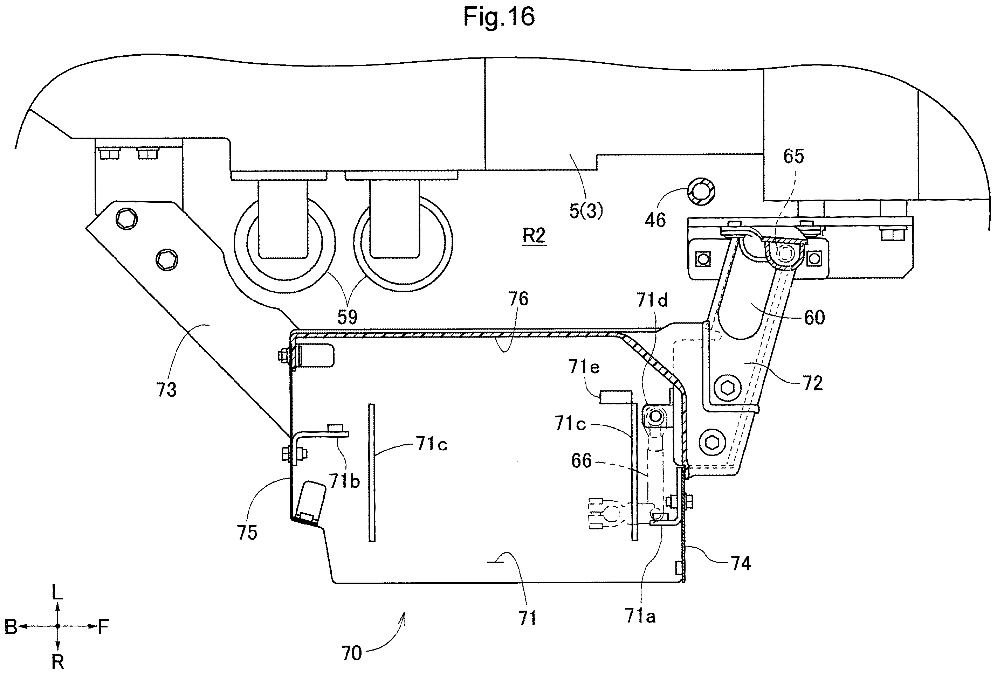

As shown in FIGS. 15 and 16, the support frame 70 includes a support section 71, a front frame section 72, a rear frame section 73, a front wall section 74, a rear wall section 75, and a left wall section 76. The front frame section 72 is joined to a front portion of the support section 71, extends obliquely forward and leftward, and is joined to a right lateral portion of the transmission case 5 (machine body 3). The rear frame section 73 is joined to a rear portion of the support section 71, extends obliquely rearward and leftward, and is joined to a right lateral portion of the transmission case 5 (the machine body 3).

The support section 71 is attached to the transmission case 5 (the machine body 3) via the front frame section 72 and the rear frame section 73 with a spacing from the transmission case 5 (the machine body 3) on the right lateral outer side. The drain hose 46 (see FIGS. 3 and 6) of the water separator 42 and an oil filter 59 of the transmission case 5 are provided in a region R2 between the support section 71 and the transmission case 5 (the machine body 3).

The support section 71 is formed in a flat plate shape. Fixing sections 71a and 71b are attached to front and rear portions, respectively, of the upper surface of the support section 71. Two round bars 71c are attached to front and rear portions, respectively, of the upper surface of the support section 71 in the left-right direction. A terminal bracket 71d and a stopper section 71e are attached near a left portion of the front round bar 71c on the upper surface of the support section 71.

As shown in FIGS. 15 to 18, a front wall section 74 and a rear wall section 75, which are metal sheets, are attached to a front portion and a rear portion, respectively, of the support section 71. The left wall section 76 made of synthetic resin is attached to and extends across a left portion of the support section 71, the front wall section 74, and the rear wall section 75.

A cover pipe 60 is attached to the front frame section 72. As shown in FIGS. 15, 16, and 19, a harness 65 extends from the machine body 3, passes through the inside of the cover pipe 60 and the front frame section 72, and extends to the upper surface of the support section 71. The harness 65 extends along a left portion of the support section 71 to the rear wall section 75, and extends to an upper portion of the rear wall section 75. The harness 65 is attached to the support section 71 via a fixing tool 67, and is attached to the upper portion of the rear wall section 75. A ground harness 66 is attached to the terminal bracket 71d of the support section 71.

### Attachment of the Battery and Support Plate to the Support Frame

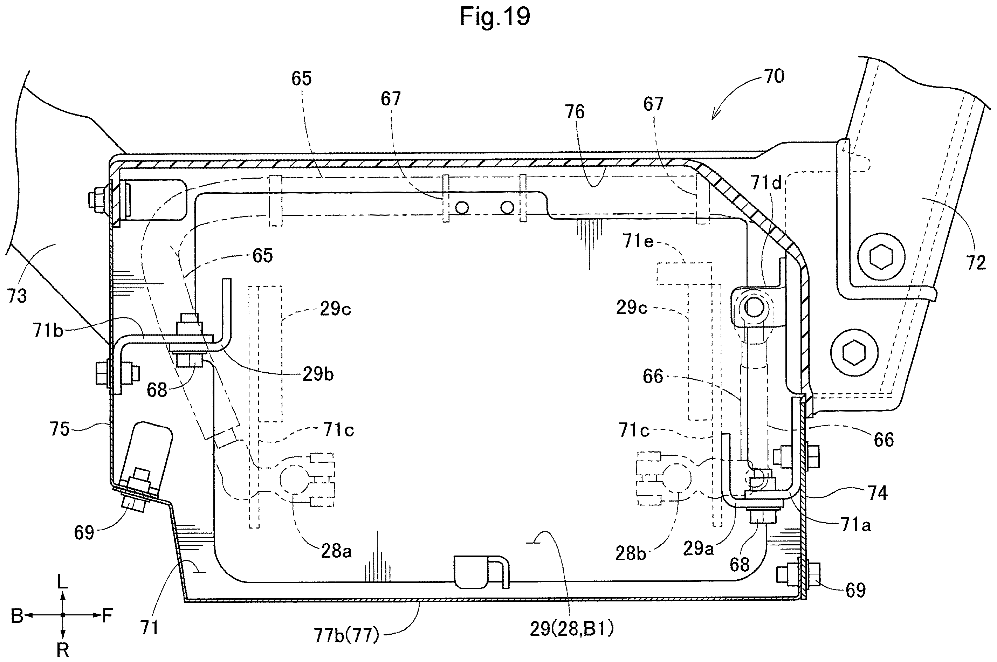

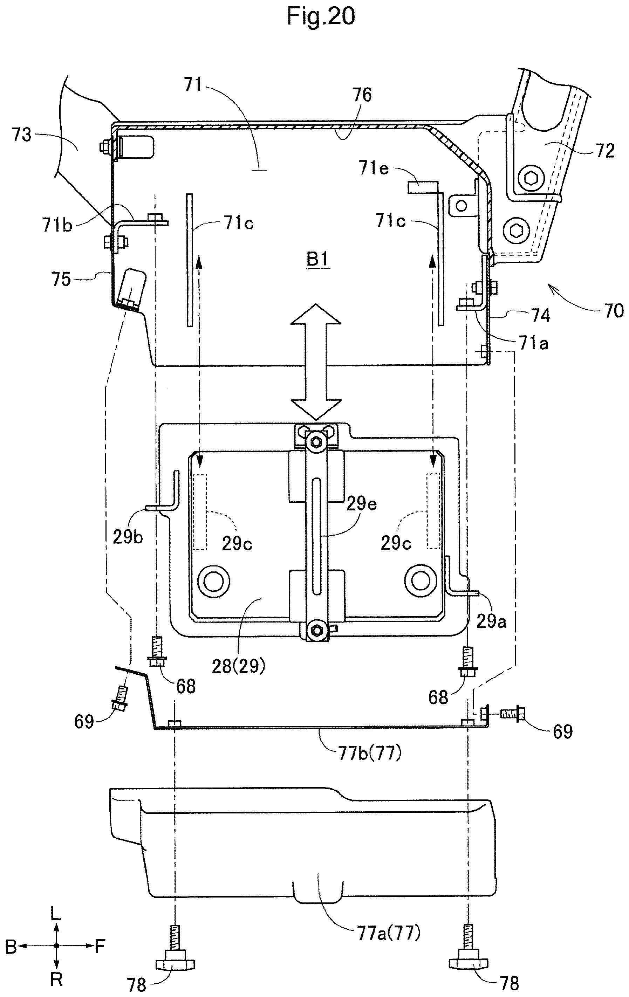

As shown in FIGS. 19 and 20, when the battery 28 (the support plate 29) is attached to the support frame 70, the battery 28 (the support plate 29) is in the following state.

The support plate 29 (the battery 28) is placed on the round bars 71c of the support frame 70 (the support section 71), and the slide plates 29c of the support plate 29 (the battery 28) are placed on the support section 71 of the support frame 70.

The round bars 71c of the support frame 70 (the support section 71) and the slide plates 29c of the support plate 29 (the battery 28) are in contact with each other so as to be adjacent to each other in the front-rear direction. A left portion of the front slide plate 29c of the support plate 29 (the battery 28) is in contact with the stopper section 71e of the support frame 70 (the support section 71) from the right side.

The attachment sections 29a and 29b of the support plate 29 (the battery 28) are in contact with the fixing sections 71a and 71b of the support frame 70 (the support section 71) from the right side. The attachment sections 29a and 29b of the support plate 29 (the battery 28) and the fixing sections 71a and 71b of the support frame 70 (the support section 71) are joined by bolts 68. The harness 65 is attached to the positive terminal 28a of the battery 28, and the harness 66 is attached to the negative terminal 28b of the battery 28.

A cover 77 covering the battery 28 is provided in the tractor. The cover 77 has an upper part 77a and a lower part 77b. As shown in FIGS. 19 to 22, the lower part 77b of the cover 77 is constituted by a metal sheet. The lower part 77b is attached by bolts 69 to a right portion of the front wall section 74, a right portion of the rear wall section 75, and a right portion of the left wall section 76 of the support frame 70.

The upper part 77a of the cover 77 is formed of synthetic resin. An engagement portion (not shown) provided at an upper end portion of the upper part 77a of the cover 77 engages with an upper end portion of the left wall section 76 of the support frame 70. A lower portion of the upper part 77a of the cover 77 is attached to an upper portion of the lower part 77b of the cover 77 by knob bolts 78.

A bottom portion, a front portion, a rear portion, a left portion, and an upper left portion of the battery 28 (the support plate 29) are covered by the support section 71, the front wall section 74, the rear wall section 75, and the left wall section 76 of the support frame 70. A lower right portion of the battery 28 is covered by the lower part 77b of the cover 77. An upper right portion of the battery 28 (the positive terminal 28a, the negative terminal 28b, and the handle section 29e of the support plate 29) is covered by the upper part 77a of the cover 77.

As described above, the battery 28 (the support plate 29) is attached to the support frame 70 (the support section 71). In other words, the battery 28 (the support plate 29) is attached to the transmission case 5 (the machine body 3) via the support frame 70, at an attachment position B1 below the right entry and exit section 13 of the floor 12.

### Positional Relationship Between Battery Attached at Attachment Position B1 and Boarding and Deboarding Step

In a state where the battery 28 (the support plate 29) is attached at the attachment position B1, the right boarding and deboarding step 15 is located laterally outward to the right of the battery 28 (the support plate 29), as shown in FIGS. 21 and 22.

The tread section 15b of the right boarding and deboarding step 15 is provided at a position overlapping the lower part 77b of the cover 77 in a side view. The upper part 77a of the cover 77 is provided at a position higher than the tread section 15b of the right boarding and deboarding step 15 in a side view, and is provided between the tread section 15b of the right boarding and deboarding step 15 and the floor 12.

A front leg section 15a of the right boarding and deboarding step 15 is provided at a position overlapping a front portion of the upper part 77a and a front portion of the lower part 77b of the cover 77 in a side view. The rear leg section 15a of the right boarding and deboarding step 15 is provided at a position overlapping a rear portion of the upper part 77a and a rear portion of the lower part 77b of the cover 77 in a side view.

### Maintenance Work for Battery

When the work vehicle is stored for a long period, there are cases where the harnesses 65 and 66 shown in FIGS. 15 and 19 are detached from the positive terminal 28a and the negative terminal 28b of the battery 28. There are also cases where booster cables (not shown) are attached to the positive terminal 28a and the negative terminal 28b of the battery 28 in order to charge the battery 28.

The operator can attach and detach the harnesses 65 and 66 to and from the battery 28, and attach and detach the booster cable to and from the battery 28, by removing the upper part 77a of the cover 77, as described below. The operator removes the knob bolt 78 from the upper part 77a of the cover 77 as shown in FIGS. 20 and 21.

When the operator moves a front portion of the upper part 77a of the cover 77 laterally outward to the right while keeping a rear portion of the upper part 77a of the cover 77 stationary and using the rear portion as a pivot, the front portion of the upper part 77a of the cover 77 enters a region surrounded by the front and rear leg sections 15a and the tread section 15b of the right boarding and deboarding step 15, while moving along an arcuate trajectory.

In this state, the operator pulls the upper part 77a of the cover 77 obliquely forward to the right. Thus, the upper part 77a of the cover 77 can be removed from the lower part 77b of the cover 77 through the region surrounded by the front and rear leg sections 15a and the tread section 15b of the right boarding and deboarding step 15.

When the operator moves a rear portion of the upper part 77a of the cover 77 laterally outward to the right while keeping a front portion of the upper part 77a of the cover 77 stationary and using the front portion as a pivot, the rear portion of the upper part 77a of the cover 77 enters the region surrounded by the front and rear leg sections 15a and the tread section 15b of the right boarding and deboarding step 15, while moving along an arcuate trajectory.

In this state, the operator pulls the upper part 77a of the cover 77 obliquely rearward to the right. Thus, the upper part 77a of the cover 77 can be removed from the lower part 77b of the cover 77 through the region surrounded by the front and rear leg sections 15a and the tread section 15b of the right boarding and deboarding step 15.

The harness 65 is attached to an upper surface section of the front frame section 72 and an upper surface section of the support section 71 of the support frame 70, and is attached to an upper portion of the rear wall section 75 of the support frame 70. Therefore, even when the operator detaches the harness 65 from the positive terminal 28a of the battery 28, the harness 65 does not move from the positions shown in FIGS. 15 and 19.

When the operator removes the battery 28 for replacement, the operator performs the operations described below.

As shown in FIGS. 19, 20, and 21, in a state in which the battery 28 (the support plate 29) is attached at the attachment position B1, the operator removes a bolt 16 and removes the right boarding and deboarding step 15 from the floor 12.

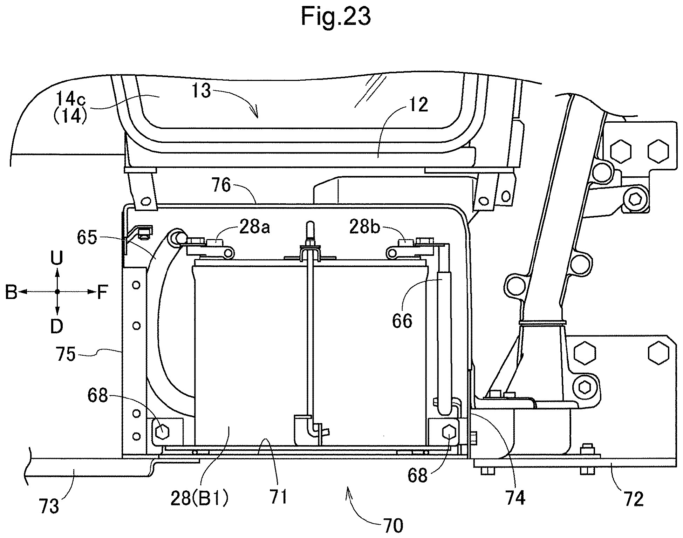

As shown in FIGS. 20 and 23, the operator removes the knob bolt 78 and removes the upper part 77a of the cover 77 from the lower part 77b of the cover 77. The operator removes the bolts 69 and removes the lower part 77b of the cover 77 from the front wall section 74, the rear wall section 75, and the left wall section 76 of the support frame 70. The operator removes the harnesses 65 and 66 from the positive terminal 28a and the negative terminal 28b of the battery 28 in the same manner as described above, and removes the bolts 68.

The operator holds the handle section 29e of the support plate 29 by hand and pulls out the battery 28 (the support plate 29) laterally outward to the right from the attachment position B1 and removes the battery 28 (the support plate 29) from the support frame 70 (the support section 71).

In this case, the support plate 29 (the battery 28) slides on the round bars 71c of the support frame 70 (the support section 71), and the slide plates 29c of the support plate 29 (the battery 28) slide on the support section 71 of the support frame 70. The contact area between the support plate 29 (the battery 28) and the support section 71 of the support frame 70 is small. This reduces resistance when the battery 28 (the support plate 29) is pulled out laterally outward to the right.

The round bars 71c of the support frame 70 (the support section 71) and the slide plates 29c of the support plate 29 (the battery 28) are in contact with each other so as to be adjacent to each other in the front-rear direction. Thus, the position of the battery 28 (the support plate 29) does not change in the front-rear direction while the battery 28 (the support plate 29) is pulled out.

After removing the battery 28 (the support plate 29) from the support frame 70 (the support section 71), the operator removes the attachment tool 29d shown in FIGS. 13 and 14 from the support plate 29 and removes the old battery 28 from the support plate 29. The operator places a new battery 28 on the upper surface section of the support plate 29 and attaches the new battery 28 to the support plate 29 using the attachment tool 29d.

Next, attachment of the battery 28 will be described. When the operator attaches the battery 28, the operator performs the following operations.

After attaching the new battery 28 to the support plate 29 as described above, the operator holds the handle section 29e of the support plate 29 (the battery 28) by hand and places the support plate 29 (the battery 28) on the round bars 71c of the support frame 70 (the support section 71), and places the slide plates 29c of the support plate 29 (the battery 28) on the support section 71 of the support frame 70, as shown in FIGS. 20 and 23.

The operator pushes the battery 28 (the support plate 29) toward the attachment position B1 while inserting the front and rear slide plates 29c of the support plate 29 (the battery 28) into the space between the front and rear round bars 71c of the support frame 70 (the support section 71).

In the same manner as when the battery 28 (the support plate 29) is pulled out laterally outward to the right, the support plate 29 (the battery 28) slides on the round bars 71c of the support frame 70 (the support section 71), and the slide plates 29c of the support plate 29 (the battery 28) slide on the support section 71 of the support frame 70. Therefore, resistance when the battery 28 (the support plate 29) is pushed in is small.

Upon the battery 28 (the support plate 29) being pushed in and reaching the attachment position B1, the front slide plate 29c of the support plate 29 (the battery 28) comes into contact with the stopper section 71e of the support frame 70 (the support section 71), and the attachment sections 29a and 29b of the support plate 29 (the battery 28) come into contact with the fixing sections 71a and 71b of the support frame 70 (the support section 71), as shown in FIGS. 19 and 20. Thus, the battery 28 (the support plate 29) is stopped at the attachment position B1. As a result, the battery 28 (the support plate 29) is not pushed beyond the attachment position B1 toward the transmission case 5 (the machine body 3).

As shown in FIGS. 20 and 23, the operator joins the attachment sections 29a and 29b of the support plate 29 (the battery 28) to the fixing sections 71a and 71b of the support frame 70 (the support section 71) with the bolts 68, thereby attaching the battery 28 (the support plate 29) at the attachment position B1. The operator attaches the harnesses 65 and 66 to the positive terminal 28a and the negative terminal 28b of the battery 28.

As shown in FIGS. 20, 21, and 22, the operator attaches the lower part 77b of the cover 77 to the front wall section 74, the rear wall section 75, and the left wall section 76 of the support frame 70 by the bolts 69. The operator attaches the upper part 77a of the cover 77 to the lower part 77b of the cover 77 by the knob bolt 78. The operator attaches the right boarding and deboarding step 15 to the floor 12 by the bolt 16.

### Correspondence Relationship Between Components

Each of the front wheels 1 and the rear wheels 2 correspond to a travel device. The machine body 3 provided with the travel devices (the front wheels 1 and the rear wheels 2), the engine 4 at a front portion of the machine body 3, and the fuel tank 79 are provided in the tractor as an example of a work vehicle. The operator section 9 at a portion of the machine body 3 rearward of the engine 4, and the wall section 40 that partitions the engine 4 from the operator section 9 are provided in the tractor. The water separator 42 that separates water from fuel supplied from the fuel tank 79 to the engine 4 and collects the separated water is provided in the tractor. The water separator 42 is provided on the side where the operator section 9 is located relative to the wall section 40.

The wall section 40 is provided forward of the operator section 9 with a spacing from the operator section 9, and the water separator 42 is provided in the region R1 between the wall section 40 and the operator section 9. The cover 41 having the upper surface section 41a that covers the upper side of the region R1 and lateral surface sections 41b that cover the lateral outer sides of the region R1 is provided in the tractor. The window section 45 is provided in the lateral surface section 41b and allows the water separator 42 to be visually checked from the lateral outer side of the lateral surface section 41b.

The air cleaner 35 is provided forward of the wall section 40, on either the left or right side of the center in the left-right direction of the machine body 3 in a plan view. The water separator 42 is provided on either the left or right side, which is the same side as the air cleaner 35, of the center in the left-right direction of the machine body 3 in a plan view.

The controller 50 for controlling the engine 4 is provided in the tractor. The controller 50 is provided on the side where the operator section 9 is located relative to the wall section 40. The controller 50 is provided in the region R1 between the wall section 40 and the operator section 9. The controller 50 is provided on either the left or right side, which is the side opposite to the air cleaner 35, of the center in the left-right direction of the machine body 3 in a plan view. The controller 50 is inclined relative to the front-rear direction of the machine body 3 in a plan view.

Each of the rear wheels 2 corresponds to a rear travel device. The machine body 3 having the left and right front wheels 1 and the left and right rear travel devices (rear wheels 2), the hood 8 at a front portion of the machine body 3, and the operator section 9 at a portion of the machine body 3 rearward of the hood 8 are provided in the tractor. The left and right illumination units 51 are provided at front portions of the hood 8. Each of the illumination units 51 includes a first illumination section 56 that illuminates a region forward of the hood 8, and a second illumination section 57 that illuminates a region rearward and downward of the region illuminated by the first illumination section 56.

The second illumination section 57 illuminates a region forward of the front wheel 1, rearward and downward of the region illuminated by the first illumination section 56. The second illumination section 57 is provided laterally outward of the first illumination section 56.

Each illumination unit 51 includes the sidelight 58 extending along the left-right direction across the first illumination section 56 and the second illumination section 57. The first illumination section 56 and the second illumination section 57 have light-emitting diodes.

The illumination units 51 are provided at upper front portions of the hood 8. The left and right headlights 61 are provided at upper front portions of the hood 8, adjacent to the lower portions of the illumination units 51, and illuminate regions forward of the hood 8. Each of the headlights 61 is provided adjacent to a portion of the lower portion of the corresponding illumination unit 51 on the central side in the left-right direction of the machine body 3.

Each of the front wheels 1 and the rear wheels 2 correspond to a travel device. Each of the positive terminal 28a and the negative terminal 28b corresponds to a terminal of the battery 28. The machine body 3 having the travel devices (the front wheels 1 and the rear wheels 2), the hood 8 at a front portion of the machine body 3, and the operator section 9 at a portion of the machine body 3 rearward of the hood 8 are provided in the tractor. The operator section 9 has the floor 12 and the entry and exit sections 13 provided at left and right portions of the floor 12 for boarding and deboarding the operator section 9. A battery 28 is provided below either a portion of the floor 12 corresponding to the right or left entry and exit section 13.

The boarding and deboarding steps 15 having the tread sections 15b provided at positions lower than the floor 12 and attached to portions of the floor 12 corresponding to the left and right entry and exit sections 13 are provided in the tractor. The boarding and deboarding step 15 of the entry and exit section 13 on the side where the battery 28 is provided is provided laterally outward of the battery 28.

The cover 77 having the upper part 77a that covers the terminals (the positive terminal 28a and the negative terminal 28b) at upper portions of the battery 28 and the lower part 77b that covers a lower portion of the battery 28 is provided in the tractor. The upper part 77a is provided at a position higher than the tread section 15b and is detachable. The lower part 77b is made of metal and is provided at a position overlapping the tread section 15b in a side view.

The support frame 70 that supports the battery 28 at the attachment position B1 below the floor 12 and supports the battery 28 such that the battery 28 is movable laterally outward from the attachment position B1 is provided in the tractor. The battery 28 is removable from the support frame 70. The boarding and deboarding step 15 of the entry and exit section 13 on the side where the battery 28 is provided is removable from the floor 12.

The support frame 70 has the support section 71 that supports the battery 28, the front frame section 72 joined to and extending between a front portion of the support section 71 and the machine body 3, and a rear frame section 73 joined to and extending between a rear portion of the support section 71 and the machine body 3. The support section 71 is attached to the machine body 3 via the front frame section 72 and the rear frame section 73 such that the support section 71 is spaced apart laterally outward from the machine body 3.

The battery 28 is attached to the upper surface section of the support section 71. The harness 65 is connected to a terminal (the positive terminal 28a) of the battery 28. The harness 65 is attached to an upper surface section of at least one of the front frame section 72 and the rear frame section 73 and extends between the battery 28 and the machine body 3.

### Alternative Embodiments

The present invention is not limited to the above embodiment as an example. The description below deals with embodiments of the present invention as other typical examples.
(1) The cabin 14 may be omitted from the operator section 9. In this case, a ROPS frame (not shown) may be provided at a position rearward of the operator seat 10. Instead of the rear wheels 2, crawler-type travel devices (not shown) may be provided as rear travel devices.
(2) The water separator 42 may be provided in a left part of the region R1, and the controller 50 may be provided in a right part of the region R1. The air cleaner 35 may be provided at an upper left portion of the engine 4, and may be provided on the left side of the center in the left-right direction of the machine body 3 (the engine 4) in a plan view. The purification device 34 may be provided at an upper right portion of the engine 4, and may be provided on the right side of the center in the left-right direction of the machine body 3 (the engine 4) in a plan view.
(3) The water separator 42 and the controller 50 may be provided in the same right portion (or the same left part) of the region R1. In this configuration, the water separator 42 and the controller 50 may be arranged next to each other in the up-down direction.
(4) The water separator 42 may be attached to the wall section 40 and provided in the region R1. The water separator 42 may be attached to a front portion of the operator section 9 (the windshield 14a of the cabin 14) and provided in the region R1. The controller 50 may be attached to the frame 38 and provided in the region R1. The controller 50 may be attached to a front portion of the operator section 9 (the windshield 14a of the cabin 14) and provided in the region R1.
(5) The wall section 40 may be omitted, and the front wall section of the operator section 9 (the windshield 14a of the cabin 14) may serve as the wall section 40. In this configuration, the water separator 42 and the controller 50 are provided inside the operator section 9 (the cabin 14) by being attached to the front wall section of the operator section 9 (the wall section 40) on the side where the operator section 9 is located.
(6) In each of the illumination units 51, the first illumination section 56 and the second illumination section 57 may be arranged next to each other in the up-down direction in the case 52 such that the first illumination section 56 is located above and the second illumination section 57 is located below, or such that the first illumination section 56 is located below and the second illumination section 57 is located above. In the configuration in which the first illumination section 56 is located above and the second illumination section 57 is located below, the illumination regions AR2 and AL2 of the second illumination sections 57 may be located below the illumination regions AR1 and AL1 of the first illumination sections 56, and the second illumination sections 57 may illuminate regions below and forward of the hood 8 (ground).
(7) The headlights 61 may illuminate regions (ground) below the illumination regions AR1 and AL1 of the first illumination sections 56 of the illumination unit 51. The headlights 61 may also illuminate an area above and forward of the illumination regions AR1 and AL1 of the first illumination sections 56 of the illumination unit 51.
(8) The first illumination sections 56 of the illumination units 51 may be lights having bulbs. The second illumination sections 57 of the illumination unit 51 may be lights having bulbs. The sidelights 58 of the illumination units 51 may be configured as lights having bulbs. The headlights 61 may have light-emitting diodes.
(9) In the case where the left and right illumination units 51 are provided at upper front portions of the hood 8, the left and right headlights 61 may be provided at lower portions of the front portion of the hood 8 with a spacing below the illumination units 51.
(10) The battery 28 (the support plate 29) and the support frame 70 may be provided below the left entry and exit section 13 of the floor 12. The fuel tank 79 may be provided below the right entry and exit section 13 of the floor 12. In this configuration, the battery 28 (the support plate 29) is removed from the support frame 70 (the support section 71) by being pulled laterally outward to the left from the attachment position B1.
(11) When the battery 28 (the support plate 29) is provided below the right (left) entry and exit section 13 of the floor 12, the support frame 70 may be attached to the floor 12 such that the battery 28 (the support plate 29) is attached to the support frame 70 (the support section 71) so as to be suspended from the floor 12.
(12) The cover 77 may be removably attached to the battery 28 (the support plate 29). In this configuration, the battery 28 (the support plate 29) and the cover 77 are removed integrally from the support frame 70 (the support section 71).
(13) The harness 65 may extend from the machine body 3 and be attached to an upper surface section of the rear frame section 73 of the support frame 70. The harnesses 65 and 66 may extend from the machine body 3 and be attached to both an upper surface section of the front frame section 72 and an upper surface section of the rear frame section 73 of the support frame 70.
(14) The engine 4 may be omitted, and a travel electric motor (not shown) may be provided in the work vehicle. In this configuration, a high-voltage battery (not shown) that supplies electric power to the electric motor is provided inside the hood 8. A low-voltage battery 28 that supplies electric power to the controller 50, the illumination units 51, various electronic devices and the like is provided below the right (left) entry and exit section 13 of the floor 12. In the case where the radiator 31 is provided inside the hood 8, the radiator 31 generates cooling water for cooling the electric motor and an inverter (not shown). In the case where the electric motor and the inverter are of the air-cooled type, the radiator 31 is not provided in the work vehicle.

The configurations disclosed in the above embodiments (including the other embodiments, the same applies hereinafter) may be implemented by being combined with configurations disclosed in other embodiments as long as no contradiction arises. The embodiments disclosed in the present specification are examples, and embodiments of the present disclosure are not limited to the above embodiments. The disclosed embodiments can be modified as appropriate within a scope not departing from the object of the present disclosure.

The present invention is not limited to a tractor and can also be applied to work vehicles such as a riding-type mower and a construction wheel loader.

## Claims

1. A work vehicle comprising:
a machine body (3) provided with a travel device (2);
a hood (8) provided at a front portion of the machine body (3);
an operator section (9) provided at a portion of the machine body (3) rearward of the hood (8), the operator section (9) having:
a floor (12); and
entry and exit sections (13) for boarding and deboarding the operator section (9), the entry and exit sections (13) being provided at left and right portions of the floor (12); and
a battery (28) provided below a portion of the floor (12) corresponding to the left or right entry and exit section (13).

2. The work vehicle according to claim 1, further comprising:
boarding and deboarding steps (15) each having a tread section (15b) provided at a position lower than the floor (12), the boarding and deboarding steps (15) being attached to portions of the floor (12) corresponding to the left and right entry and exit sections (13),
wherein the boarding and deboarding step (15) of the entry and exit section (13) on a side where the battery (28) is provided is provided laterally outward of the battery (28).

3. The work vehicle according to claim 2, further comprising:
a cover (77) having:
an upper part (77a) covering a terminal (28a, 28b) at an upper portion of the battery (28); and
a lower part (77b) covering a lower portion of the battery (28),
wherein the upper part (77a) is provided at a position higher than the tread section (15b) and is attachable and detachable.

4. The work vehicle according to claim 3, wherein
the lower part (77b) is made of a metal, and is provided at a position overlapping the tread section (15b) in a side view.

5. The work vehicle according to any one of claims 2 to 4, wherein
the boarding and deboarding step (15) of the entry and exit section (13) on the side where the battery (28) is provided is removable from the floor (12).

6. The work vehicle according to any one of claim 2 to 5, further comprising:
a support frame (70) attaching the battery (28) at an attachment position (B1) below the floor (12) and supporting the battery (28) in such a manner that the battery (28) is movable laterally outward from the attachment position (B1),
wherein the battery (28) is removable from the support frame (70).

7. The work vehicle according to claim 6, wherein
the support frame (70) has:
a support section (71) supporting the battery (28);
a front frame section (72) joined to and extending between a front portion of the support section (71) and the machine body (3); and
a rear frame section (73) joined to and extending between a rear portion of the support section (71) and the machine body (3), and
the support section (71) is attached to the machine body (3) via the front frame section (72) and the rear frame section (73) in such a manner that the support section (71) is spaced apart laterally outward from the machine body (3).

8. The work vehicle according to claim 7, wherein
the battery (28) is attached to an upper surface section of the support section (71).

9. The work vehicle according to claim 7 or 8, further comprising:
a harness (65) connected to a terminal (28a, 28b) of the battery (28), attached to an upper surface section of at least one of the front frame section (72) and the rear frame section (73), and extending between the battery (28) and the machine body (3).
